# EUROPEAN PATENT APPLICATION

(11) **EP 3 214 744 A1**
(43) Date of publication of application: **06.09.2017**
(21) Application number: 15855360.2
(22) Date of filing: 27.10.2015
(51) Int. Cl.: H02K 41/03

(54) **LINEAR ACTUATOR**

(30) Priority: 29.10.2014 JP 2014220169
(71) Applicant: KYB Corporation, Tokyo 105-6111 (JP)
(72) Inventor: SATOU, Kousuke, Tokyo 105-6111 (JP)
(74) Representative: Grünecker Patent- und Rechtsanwälte PartG mbB
(86) International application number: PCT/JP2015/080280
(87) International publication number: WO 2016/068144

(57) **Abstract**

A linear actuator (100) includes; a first tube (10) provided with a plurality of coils (41) placed thereinside, the plurality of coils (41) being held by a tubular yoke (40); a rod (30) that is movable in an axial direction inside the yoke (40); a plurality of permanent magnets (31) held by the rod (30) while being lined up in the axial direction, the plurality of permanent magnets (31) opposing the plurality of coils (41); and a detent member (60) configured to prevent relative rotations of the first tube (10) and the yoke (40).

## Description

### TECHNICAL FIELD

The present invention relates to a linear actuator that is extended and contracted in an axial direction by an electromagnetic force.

### BACKGROUND ART

JP 2008-253009A discloses an electric actuator in which a stator provided with a plurality of stator cores and armature coils is placed inside a fixed-side main body.

### SUMMARY OF INVENTION

In the linear actuator described in JP 2008-253009A, the stator may rotate inside the fixed-side main body due to vibration and the like.

The present invention aims to provide a linear actuator that can prevent the rotation of a yoke provided with a plurality of coils, even under the influence of vibration and the like.

According to one aspect of the present invention, a linear actuator includes; a main body portion provided with a plurality of coils placed thereinside, the plurality of coils being held by a tubular yoke; a rod that is movable in an axial direction inside the yoke ; a plurality of permanent magnets held by the rod while being lined up in the axial direction, the plurality of permanent magnets opposing the plurality of coils; and a detent member configured to prevent relative rotations of the main body portion and the yoke.

### BRIEF DESCRIPTION OF DRAWINGS

FIG. 1 is a cross-sectional view of a linear actuator in a contracted state according to a first embodiment of the present invention, taken along an axial direction.
FIG. 2A is an enlarged view of main components in FIG. 1.
FIG. 2B is a cross-sectional view taken along the line A-A in FIG. 2A.
FIG. 2C is a cross-sectional view taken along the line B-B in FIG. 2A.
FIG. 3A is an enlarged cross-sectional view of main components of a linear actuator in a contracted state according to a second embodiment of the present invention, taken along an axial direction.
FIG. 3B is a cross-sectional view taken along the line C-C in FIG. 3A.
FIG. 3C is a cross-sectional view taken along the line D-D in FIG. 3A.
FIG. 4A is an enlarged cross-sectional view of main components of a linear actuator in a contracted state according to a third embodiment of the present invention, taken along an axial direction.
FIG. 4B is a cross-sectional view taken along the line E-E in FIG. 4A.

### DESCRIPTION OF EMBODIMENTS

An embodiment of the present invention will be described below with reference to the attached drawings.

### First Embodiment

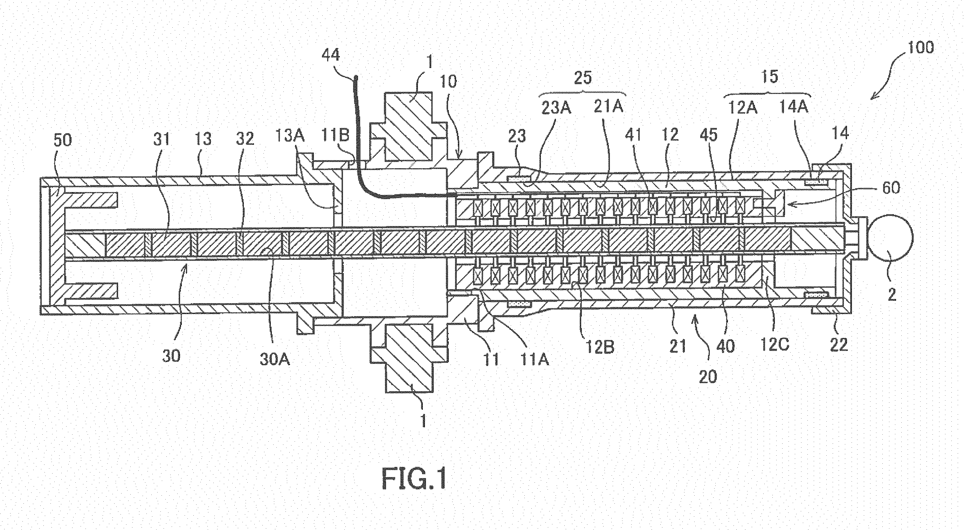

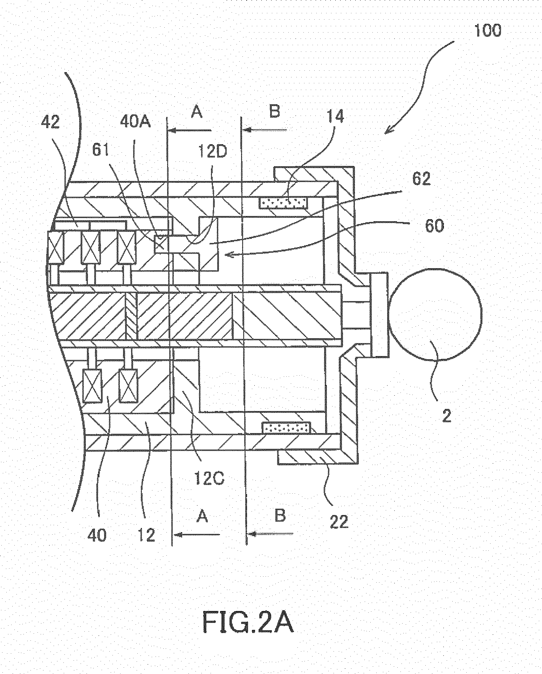

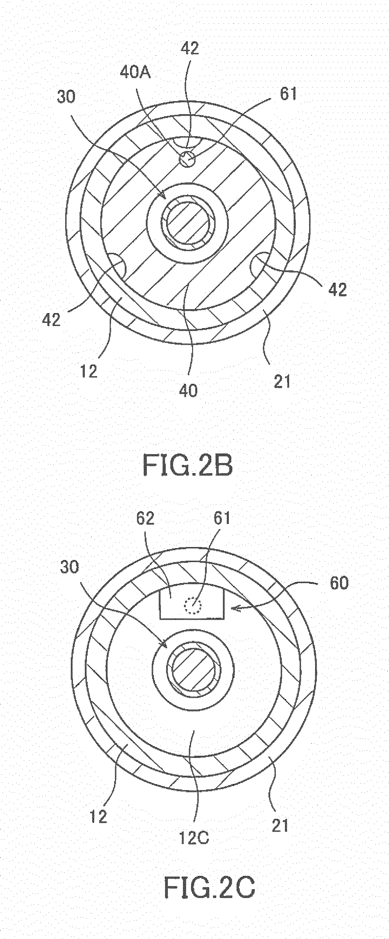

The following describes a linear actuator 100 according to a first embodiment of the present invention with reference to FIGs. 1 to 2C. FIG. 1 is a cross-sectional view of the linear actuator 100 in a contracted state taken along an axial direction. FIG. 2A is an enlarged view of main components in FIG. 1. FIG. 2B is a cross-sectional view taken along the line A-A in FIG. 2A. FIG. 2C is a cross-sectional view taken along the line B-B in FIG. 2A.

The linear actuator 100 includes a first tube 10 serving as a main body portion, a second tube 20 that is slidably mounted on an outer circumference of the first tube 10, a rod 30 that is fixed to an end of the second tube 20 and holds permanent magnets 31, and a yoke 40 that is fit inside the first tube 10 and holds coils 41 opposing the permanent magnets 31.

In the linear actuator 100, a thrust (an electromagnetic force) that drives the rod 30 in the axial direction is generated in accordance with a current flowing through the coils 41, and the first tube 10 and the second tube 20 are relatively displaced on the basis of the thrust. This causes the linear actuator 100 to extend and contract between a fully contracted position shown in FIG.1 and a fully extended position (not shown).

The first tube 10 includes a base portion 11 having a shape of a hollow cylinder, an inner tube 12 that is fixed to one end of the base portion 11, and a guide tube 13 that is fixed to the other end of the base portion 11.

The base portion 11 is a tubular member that is open at both ends. A pair of trunnion shafts 1 projecting in a radial direction is fixed to an outer circumference of the base portion 11. The pair of trunnion shafts 1 is rotatably supported by an external member (not shown). Accordingly, the linear actuator 100 is held in such a manner that it is rotatable with respect to the external member.

The second tube 20 includes an outer tube 21 that has a shape of a hollow cylinder and is open at both ends, and a cap 22 that is attached to one end of the outer tube 21. One end of the second tube 20 is closed by the cap 22. The other end of the second tube 20 is an open end into which the inner tube 12 of the first tube 10 is inserted. A joint member 2 that is joined with the external member (not shown) is fixed to an outer side surface of the cap 22.

The inner tube 12 is slidably inserted into the outer tube 21 while being mounted on the base portion 11. One end of the inner tube 12 is fixedly fit on an inner circumferential surface 11A of the base portion 11. That is to say, the inner tube 12 is supported by the base portion 11 at one end.

The linear actuator 100 includes a first linear guide portion 15 and a second linear guide portion 25 for supporting the first tube 10 and the second tube 20 in such a manner that the first tube 10 and the second tube 20 can be relatively displaced in the axial direction.

A ring-shaped first bearing 14 is mounted on an outer circumference of a free end of the inner tube 12. A bearing surface (an outer circumferential surface) 14A of the first bearing 14 is in sliding contact with an inner circumferential surface 21A of the outer tube 21. The first linear guide portion 15 is composed of an outer circumferential surface 12A of the inner tube 12 and the bearing surface 14A of the first bearing 14.

A ring-shaped second bearing 23 is mounted on an inner circumference of the open end side of the outer tube 21. A bearing surface (an inner circumferential surface) 23A of the second bearing 23 is in sliding contact with the outer circumferential surface 12A of the inner tube 12. The second linear guide portion 25 is composed of the inner circumferential surface 21A of the outer tube 21 and the bearing surface 23A of the second bearing 23.

During the extension and contraction of the linear actuator 100, in the first linear guide portion 15, the bearing surface 14A of the first bearing 14 is in sliding contact with the inner circumferential surface 21A of the outer tube 21. On the other hand, in the second linear guide portion 25, the bearing surface 23A of the second bearing 23 is in sliding contact with the outer circumferential surface 12A of the inner tube 12. Accordingly, the inner tube 12 and the outer tube 21 smoothly slide on each other. The outer circumferential surface 12A of the inner tube 12 and the inner circumferential surface 21A of the outer tube 21 oppose each other, with no gap therebetween, via the first bearing 14 and the second bearing 23.

The guide tube 13 is a tubular member that is open at both ends. An end of the guide tube 13 on the base portion 11 side has an annular projected portion 13A that projects inward. A rod guide 50 that is fixed to an end of the rod 30 is slidably placed inside the guide tube 13.

The rod 30 is a pole-like member with a hollow portion 30A. One end of the rod 30 is fixed to the inner side of the cap 22 that constitutes an end of the second tube 20. Furthermore, the other end of the rod 30 is fixed to the aforementioned rod guide 50. As the rod guide 50 is mounted on the other end of the rod 30, the guide tube 13 and the rod 30 are reliably rendered coaxial. This prevents the end of the rod 30 from swinging in the radial direction during the extension and contraction of the linear actuator 100.

The plurality of permanent magnets 31 are held in the hollow portion 30A of the rod 30 while being lined up in the axial direction. Each permanent magnet 31 has a columnar shape, and is magnetized in such a manner that its N pole and S pole are positioned in the axial direction. Neighboring permanent magnets 31 are placed in such a manner that their ends of the same polarity oppose each other. Furthermore, a yoke 32 is provided between neighboring permanent magnets 31. Note that the yokes 32 need not necessarily be provided, and neighboring permanent magnets 31 may be in contact with each other.

The yoke 40 having a shape of a hollow cylinder is mounted on an inner circumferential surface 12B of the inner tube 12. The yoke 40 has an insertion hole 45 through which the rod 30 is inserted in the axial direction. The plurality of coils 41 are embedded in the yoke 40. Note that the yoke 40 is made by integrally stacking ring-shaped members in the axial direction, with each coil 41 wound inside a space formed by contacting surfaces of neighboring ring-shaped members. The plurality of coils 41 are lined up in the axial direction so as to oppose the permanent magnets 31.

The inner tube 12 has an annular projected portion 12C that projects inward. The yoke 40 is inserted into the inner tube 12 so as to be in contact with the projected portion 12C.

As shown in FIG. 2A, the projected portion 12C of the inner tube 12 has a through hole 12D. Furthermore, an end face of the yoke 40 on the projected portion 12C side has a recess 40A at a position facing the through hole 12D.

As shown in FIGs. 2A and 2C, a detent member 60 includes a pin 61 and a flange-like attachment portion 62. The pin 61 is inserted through the through hole 12D, which is provided in the projected portion 12C, to be inserted into the recess 40A of the yoke 40. The attachment portion 62 of the detent member 60 is attached to the projected portion 12C using a screw (not shown). Accordingly, the detent member 60 prevents relative rotations of the inner tube 12 and the yoke 40.

Note that the detent member 60 is not limited to being attached to the projected portion 12C using the screw. The detent member 60 may be attached to the projected portion 12C by adhesion, welding, press fitting, or other means. Furthermore, the detent member 60 may not include the attachment portion 62, in which case the pin 61 is attached directly to the projected portion 12C. Moreover, the pin 61 is not limited to having a columnar shape, and may have a prismatic shape or may be hollow. Instead of being attached to the projected portion 12C, the detent member 60 may be attached to the base portion 11 or an end of the inner tube 12 on the base portion 11 side. Alternatively, the detent member 60 may be attached to both of them.

As shown in FIGs. 2A and 2B, an outer circumferential surface of the yoke 40 has a plurality of grooves 42 each running in a direction of an axis line. Wires 44 from the plurality of coils 41 are housed in the grooves 42. Note that the grooves 42 are not limited to being provided at three positions, however, the grooves 42 may be provided at four positions, or any number of grooves 42 may be provided. Furthermore, the grooves 42 are not limited to having an arc-shaped cross-section, and may have a triangular or quadrilateral cross-section. Instead of being provided on the outer circumferential surface of the yoke 40, the grooves 42 may be provided on the inner circumferential surface 12B of the inner tube 12. The grooves 42 may be provided on both of the outer circumferential surface of the yoke 40 and the inner circumferential surface 12B of the inner tube 12.

As shown in FIG. 1, the wires 44 from the plurality of coils 41 are drawn to the outside via the grooves 42 and an opening 11B that is provided in the base portion 11. Once the wires 44 have been drawn to the outside, it is connected to a controller (not shown). The controller controls the thrust generated by the linear actuator 100 and the directions of the generated thrust (the extension and contraction directions) by controlling the intensity and phase of the current supplied to the coils 41.

A description is now given of the operation of the linear actuator 100.

In the linear actuator 100, when the coils 41 are supplied with a current of a predetermined direction, a thrust that drives the rod 30 in one direction (a rightward direction in FIG. 1) is generated. Along with the driving of the rod 30 in one direction, the linear actuator 100 extends as the outer tube 21 of the second tube 20 moves while sliding with respect to the inner tube 12 of the first tube 10.

When the linear actuator 100 has extended to the fully extended position, the rod guide 50 is in contact with a side surface of the projected portion 13A, thereby restricting a further movement of the rod 30. As such, the projected portion 13A functions as a stopper.

On the other hand, when the coils 41 are supplied with a current with a phase opposite to a phase of the current supplied during the extension, a thrust that drives the rod 30 in the other direction (a leftward direction in FIG. 1) is generated. Along with the driving of the rod 30 in the other direction, the linear actuator 100 contracts as the outer tube 21 of the second tube 20 moves while sliding with respect to the inner tube 12 of the first tube 10.

When the linear actuator 100 has contracted to the fully contracted position, an open end of the outer tube 21 is in contact with an end of the base portion 11, thereby restricting a further movement of the rod 30. As such, the open end of the outer tube 21 functions as a stopper.

At this time, even if vibration is generated by the operation of the linear actuator 100, the yoke 40 does not rotate with respect to the first tube 10 because the detent member 60 is attached to the inner tube 12 and the pin 61 of the detent member 60 is inserted into the recess 40A of the yoke 40.

The foregoing first embodiment achieves the following effect.

The detent member 60 is attached to the inner tube 12, and the pin 61 of the detent member 60 is inserted into the recess 40A of the yoke 40. This can prevent relative rotations of the first tube 10 and the yoke 40.

### Second Embodiment

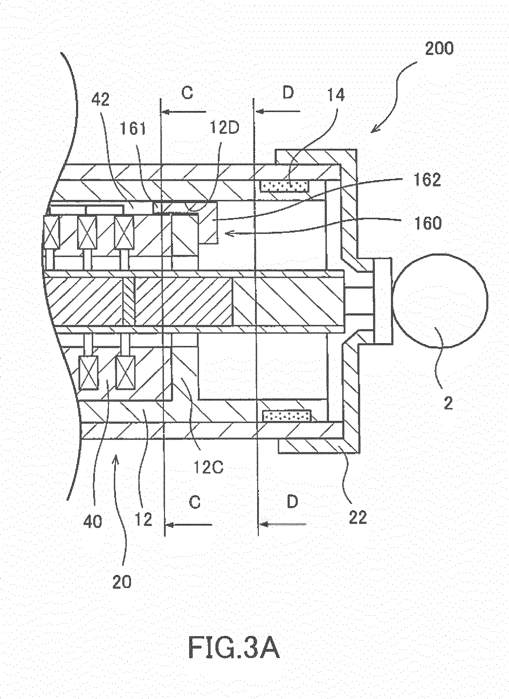

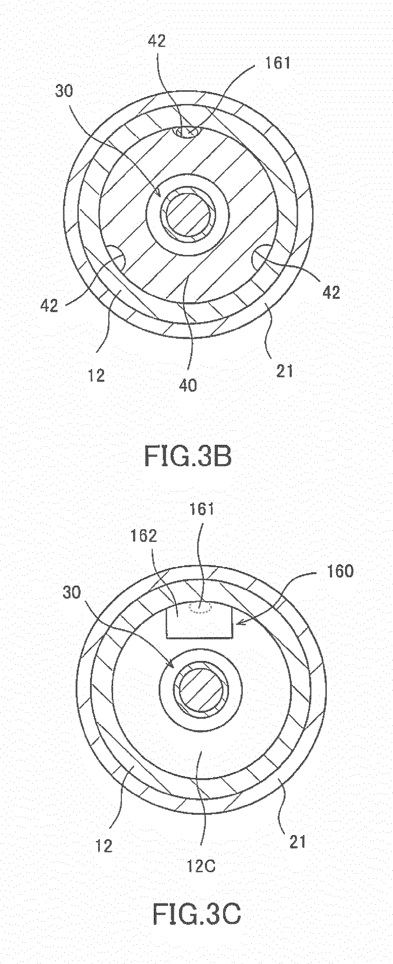

The following describes a linear actuator 200 according to a second embodiment of the present invention with reference to FIGs. 3A to 3C. FIG. 3A is an enlarged cross-sectional view of main components of the linear actuator in a contracted state according to the second embodiment of the present invention, taken along an axial direction. FIG. 3B is a cross-sectional view taken along the line C-C in FIG. 3A. FIG. 3C is a cross-sectional view taken along the line D-D in FIG. 3A.

In the following description of the second embodiment, differences from the above first embodiment will be focused. Furthermore, components that are the same as components of the linear actuator 100 according to the first embodiment will be given the same reference signs thereas, and the explanation thereof will be omitted.

The second embodiment differs from the first embodiment in that a pin 161 is inserted into one of grooves 42 instead of a recess 40A.

A detent member 160 includes the pin 161 and a flange-like attachment portion 162. The pin 161 of the detent member 160 is inserted through a through hole 12D, which is provided in a projected portion 12C, to be inserted into one of the grooves 42 provided on an outer circumference of the yoke 40. The attachment portion 162 of the detent member 160 is attached to the projected portion 12C using a screw (not shown). Accordingly, the detent member 160 prevents relative rotations of an inner tube 12 and the yoke 40.

Note that the detent member 160 may not include the attachment portion 162, in which case the pin 161 is attached directly to the projected portion 12C. Furthermore, the detent member 160 is not limited to being attached to the projected portion 12C using the screw. The detent member 160 may be attached to the projected portion 12C by adhesion, welding, press fitting, or other means.

Moreover, the pin 161 is not limited to having a columnar shape, and may have a prismatic shape, may be hollow, or may have the same cross-section as the grooves 42.

The foregoing second embodiment achieves the following effects in addition to the effect achieved by the first embodiment.

As one of the grooves 42 that house wires 44 from coils 41 is also used as a recess into which the pin 161 is inserted, there is no need to provide the yoke 40 with a recess into which the pin 161 is inserted. Therefore, the number of processes related to recess formation can be reduced. Furthermore, as a new recess is not formed in the yoke 40, the influence on the magnetic property of the yoke 40 is reduced.

### Third Embodiment

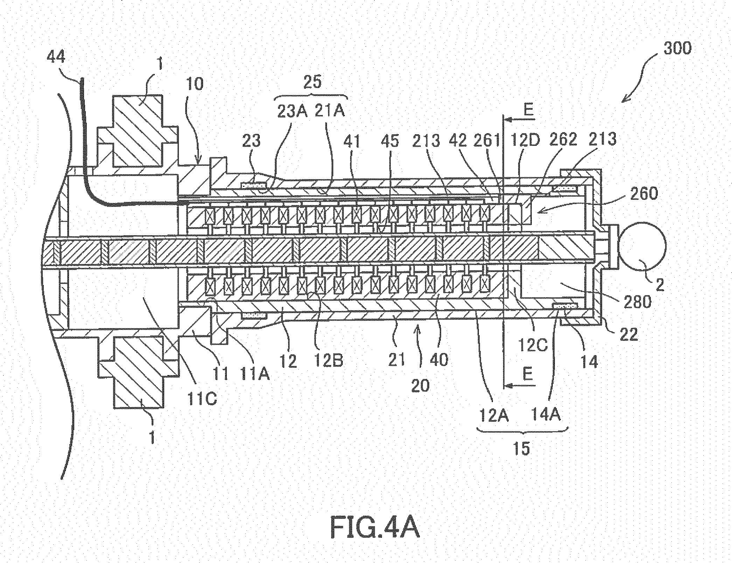

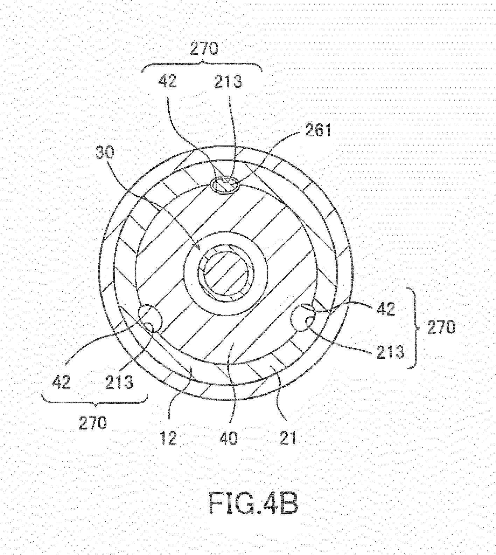

The following describes a linear actuator 300 according to a third embodiment of the present invention with reference to FIGs. 4A and 4B. FIG. 4A is an enlarged cross-sectional view of main components of the linear actuator in a contracted state according to the third embodiment of the present invention, taken along an axial direction. FIG. 4B is a cross-sectional view taken along the line E-E in FIG. 4A.

In the following description of the third embodiment, differences from the above second embodiment will be focused. Furthermore, components that are the same as components of the linear actuator 200 according to the second embodiment will be given the same reference signs thereas, and the explanation thereof will be omitted.

The third embodiment differs from the second embodiment in that an inner circumferential surface 12B of an inner tube 12 has grooves 213, and a pin 261 is inserted into one of spaces 270 formed by grooves 42 of the yoke 40 and the grooves 213 of the inner tube 12.

The inner circumferential surface 12B of the inner tube 12 has the plurality of grooves 213 each running in a direction of an axis line. The grooves 213 are provided at positions facing the grooves 42 of the yoke 40. A detent member 260 includes the pin 261 and a flange-like attachment portion 262. The pin 261 of the detent member 260 is inserted through a through hole 12D, which is provided in a projected portion 12C, to be inserted into one of the spaces 270 formed by the grooves 42 of the yoke 40 and the grooves 213 of the inner tube 12. The attachment portion 262 of the detent member 260 is attached to the projected portion 12C using a screw (not shown). Accordingly, the detent member 260 prevents relative rotations of the inner tube 12 and the yoke 40.

The grooves 213 penetrate the projected portion 12C, thereby allowing communication between a space 280 formed by the inner tube 12 and an outer tube 21 and an internal space 11C of a base portion 11.

During the extension of the linear actuator 300 configured in the foregoing manner, air in the internal space 11C of the base portion 11 is suctioned into the space 280 via the grooves 213. On the other hand, during the contraction of the linear actuator 300, air in the space 280 is discharged to the internal space 11C of the base portion 11 via the grooves 213. As such, the grooves 213 function as breathing channels.

Note that the grooves 42 and the grooves 213 are not limited to being provided at three positions. The grooves 42 and the grooves 213 may be provided at four positions, or any number of grooves 42 and grooves 213 may be provided. Furthermore, the grooves 42 and the grooves 213 are not limited to having an arc-shaped cross-section, and may have a triangular or quadrilateral cross-section.

Moreover, the pin 261 is not limited to having a columnar shape, and may have a prismatic shape, may be hollow, or may have the same cross-section as the spaces 270.

The foregoing third embodiment achieves the following effects in addition to the effects achieved by the second embodiment.

The pin 261 is inserted into one of the spaces 270 formed by the grooves 42 of the yoke 40 and the grooves 213 of the inner tube 12. This makes it possible to increase the thickness of the pin 261 compared with a pin 161 that is inserted into a space formed only by a groove 42. As a result, the strength of the pin 261 is increased, and so is the reliability of the detent member 260.

Furthermore, as wires 44 are positioned in the spaces 270 formed by the grooves 42 and the grooves 213, the yoke 40 can be smoothly inserted into the inner tube 12 without the wires 44 getting caught on the inner circumferential surface of the inner tube 12. Moreover, as the grooves 213 function as the breathing channels, the reliability of the operation of the linear actuator 300 is further increased.

Embodiments of this invention were described above, but the above embodiments are merely examples of applications of this invention, and the technical scope of this invention is not limited to the specific constitutions of the above embodiments.

This application claims priority based on Japanese Patent Application No.2014-220169 filed with the Japan Patent Office on October 29, 2014, the entire contents of which are incorporated into this specification.

## Claims

1. A linear actuator, comprising:
a main body portion provided with a plurality of coils placed thereinside, the plurality of coils being held by a tubular yoke;
a rod that is movable in an axial direction inside the yoke;
a plurality of permanent magnets held by the rod while being lined up in the axial direction, the plurality of permanent magnets opposing the plurality of coils; and
a detent member configured to prevent relative rotations of the main body portion and the yoke.

2. The linear actuator according to claim 1,
wherein
the detent member faces at least one of end faces of the yoke.

3. The linear actuator according to claim 1,
wherein
an end face of the yoke has a recess into which the detent member is inserted.

4. The linear actuator according to claim 1,
wherein
the yoke has a groove into which the detent member is inserted.

5. The linear actuator according to claim 4,
wherein
the groove is provided on an outer circumferential surface of the yoke, and runs in a direction of an axis line, and
wires connected to the plurality of coils are housed in the groove.

6. The linear actuator according to claim 1,
wherein
the main body portion has a projected portion projecting from an inner circumference thereof, and
the detent member is attached to the projected portion.
